# EUROPEAN PATENT SPECIFICATION

(11) **EP 1 293 850 B1**
(45) Date of publication and mention of the grant of the patent: **12.10.2011**
(21) Application number: 02724743.6
(22) Date of filing: 09.05.2002
(51) Int. Cl.: G04G 99/00

(54) **INFORMATION PROCESSOR**
INFORMATIONSPROZESSOR
PROCESSEUR D'INFORMATION

(30) Priority: 11.05.2001 JP 2001141043
(43) Date of publication of application: 19.03.2003
(73) Proprietor: Sony Corporation, Tokyo 141-0001 (JP)
(72) Inventor: Shimakura, Hideaki, Shinagawa-ku, Tokyo 141-0001 (JP)
(74) Representative: Mills, Julia
(86) International application number: PCT/JP2002/004517
(87) International publication number: WO 2002/093274

(56) References cited:
- EP-A- 0 418 012
- GB-A- 2 234 616
- JP-A- 4 105 093
- JP-A- 4 359 185
- JP-A- 9 026 489
- JP-A- 09 282 383
- JP-A- 11 153 679
- JP-A- 11 275 494
- JP-A- 61 157 975
- JP-A- 2001 197 169
- PATENT ABSTRACTS OF JAPAN vol. 017, no. 290 (P-1549), 3 June 1993 (1993-06-03) & JP 05 019071 A (SONY CORP), 26 January 1993 (1993-01-26)

## Description

### TECHNICAL FIELD

The present invention relates to information processing apparatuses. In particular, the present invention relates to an information processing apparatus in which time information set in the information processing apparatus, which is provided with an imaging function, such as a video camera and so forth, is added, and it is possible to obtain World Standard Time (GMT: Greenwich Mean Time) based on area information and summertime information.

### BACKGROUND ART

A function for setting the time is provided in electronic devices having an imaging function, as typified by video cameras.

In video cameras, not only is the time set by this time setting function displayed as a simple clock, but it is also recorded together with the captured images. Accordingly, management of the captured images can be simplified, and it can be used for a timer function and so on.

Recently, electronic devices for portable use can be allowed to access a server via a network by including a built-in communication function or by connecting a communication apparatus such as a mobile telephone and so forth. Devices which access a server via a network normally transmit a user login name and password information at access time, and in addition, they transmit World Standard Time (=Greenwich Mean Time: GMT) information for the transmission time. Based on this information, the server executes access time management and authentication processing to determine whether or not access is permitted.

However, in the time setting function built into conventional video cameras, no function for obtaining or setting World Standard Time is provided. For this reason, when, for example, accessing the server via the network with the communication function included in the video camera, as described above, there are problems in that it is usually not possible to transmit World Standard Time information, which is required for access, the server therefore cannot be accessed, and thus it is not possible to perform, for example, video mail and so forth using the video camera unit.

Furthermore, if the time set by the time setting function of the video camera is used instead of World Standard Time, in the case where the time in the vicinity of London or the like, which is used a reference point for World Standard Time, is set, since the time is actually World Standard Time, no problems occur. However, if, for example, Japanese Standard Time is used instead of World Standard Time is used instead of World Standard Time, since the nine-hour time difference (Japanese Standard Time has a nine-hour time difference with respect to World Standard Time) is not taken into account, when performing transmission and reception of mail and so forth delivered by the server via the network, there will be a nine-hour time difference at that time, and it is therefore impossible to correctly ascertain the time at which the mail was transmitted and received, which is a problem.

US 5490122 discloses a clock apparatus for use in a video camera. Buttons are provided to adjust the data and the time to set a standard time. A standard area corresponding to the standard time may be preset depending on the shipping destination from the factory. If the user goes to another location, an area button is pressed to change the area code from the standard area to the area code of the current location. The apparatus corrects for the time difference between the standard area code and the new area code to calculate the time for the new location. A summer time button is used to switch the time mode between winter mode and summer mode.

GB 2 234 616 discloses a world time displaying method of a television receiver which can display other regional name and the time of the region upon the selection of the regional name. The Greenwich Mean Time is calculated from the present time and the constant of the reference region according to selecting other region different from the reference region.

### DISCLOSURE OF THE INVENTION

The present invention has been developed in light of these circumstances, and in an information processing apparatus having an imaging function, such as a video camera, by using accurate World Standard Time information, which is calculated, the video camera itself, as a single unit, can access a server via a network.

The information processing apparatus of the present invention according to claim 1 comprises an input unit formed of a rotary/pushbutton operating element, time setting means, the area set using the area setting means, and the information indicating whether or not summertime is in effect, which is set using the summertime information setting means. The information processing apparatus further comprises an accessing means for accessing a server via a network, and in the accessing means, when accessing the server via the network, at that time, it is possible to send the world standard time calculated using world standard time calculating means to the server.

It is possible to further provide area storage means for storing in advance a plurality of areas, and, in the area setting means, it is possible to set an area, input using the input unit, from among the areas stored in advance in the area storage means.

In the area storage means, it is possible to further store time-difference information, with respect to the world standard time, for each of the plurality of areas, and in the world standard time calculating means, the world standard time can be calculated from the time set using the time setting means, the time-difference information, with respect to world standard time, for the area input and set using the input means from among the areas stored in advance using the area storage means, and the information indicating whether or not summertime is in effect, which is set using the summertime information setting means.

As described herein, by using an input unit formed of a rotary/pushbutton operating element, the time is set, an area is set, and information indicating whether or not summertime is in effect is set, and world standard time is calculated from the set time, the set area, and the set information indicating whether or not summertime is in effect.

### BRIEF DESCRIPTION OF THE DRAWINGS

Fig. 1 is an outline view of a video camera showing the configuration of an embodiment employing the present invention.
Fig. 2 is a drawing for explaining a jog-dial in Fig. 1.
Fig. 3 is a view for explaining the electrical configuration of the video camera in Fig. 1.
Fig. 4 is a flowchart for explaining setting processing.
Fig. 5 is a flowchart for explaining setting processing.
Fig. 6 is a drawing showing an example of a setting screen display which is displayed on an LCD in Fig. 1.
Fig. 7 is a flowchart for explaining date and time setting processing.
Fig. 8 is a drawing showing an example of a setting screen display which is displayed on the LCD in Fig. 1.
Fig. 9 is a flowchart for explaining area setting processing.
Fig. 10 is a drawing showing an example of a setting screen display which is displayed on the LCD in Fig. 1.
Fig. 11 is a drawing showing an example of a setting screen display which is displayed on the LCD in Fig. 1.
Fig. 12 is a flowchart for explaining summertime setting processing.
Fig. 13 is a drawing showing an example of a setting screen display which is displayed on the LCD in Fig. 1.
Fig. 14 is a drawing showing an example of a setting screen display which is displayed on the LCD in Fig. 1.
Fig. 15 is a drawing showing an example of a setting screen display which is displayed on the LCD in Fig. 1.

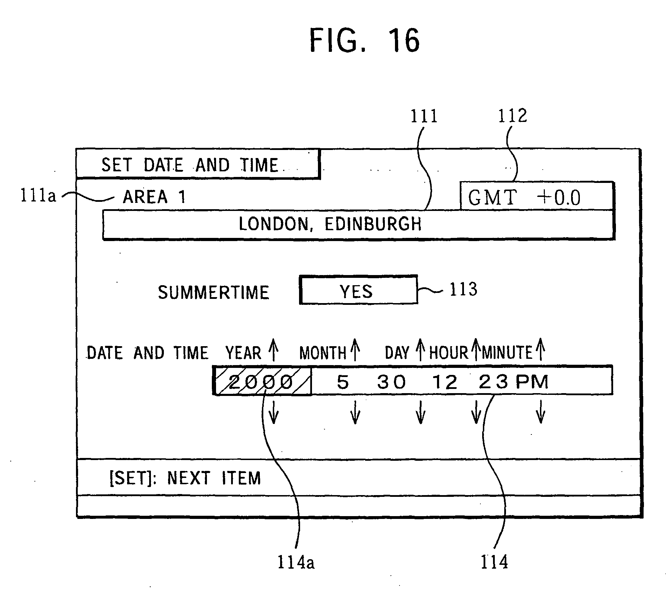

Fig. 16 is a drawing showing an example of a setting screen display which is displayed on the LCD in Fig. 1.
Fig. 17 is a flowchart for explaining year setting processing.
Fig. 18 is a drawing showing an example of a setting screen display which is displayed on the LCD in Fig. 1.
Fig. 19 is a drawing showing an example of a setting screen display which is displayed on the LCD in Fig. 1.
Fig. 20 is a drawing showing an example of a setting screen display which is displayed on the LCD in Fig. 1.
Fig. 21 is a drawing showing an example of a setting screen display which is displayed on the LCD in Fig. 1.
Fig. 22 is a drawing showing an example of a setting screen display which is displayed on the LCD in Fig. 1.
Fig. 23 is a drawing showing an example of a setting screen display which is displayed on the LCD in Fig. 1.
Fig. 24 is a drawing showing an example of a setting screen display which is displayed on the LCD in Fig. 1.
Fig. 25 is a drawing showing an example of a setting screen display which is displayed on the LCD in Fig. 1.
Fig. 26 is a drawing showing an example of a setting screen display which is displayed on the LCD in Fig. 1.
Fig. 27 is a drawing showing an example of a setting screen display which is displayed on the LCD in Fig. 1.
Fig. 28 is a drawing showing an example of a setting screen display which is displayed on the LCD in Fig. 1.
Fig. 29 is a drawing showing an example of a setting screen display which is displayed on the LCD in Fig. 1.
Fig. 30 is a drawing showing an example of a setting screen display which is displayed on the LCD in Fig. 1.
Fig. 31 is a flowchart for explaining network access processing.
Fig. 32 is a drawing showing an example of a setting screen display which is displayed on the LCD in Fig. 1.
Fig. 33 is a drawing showing an example of a setting screen display which is displayed on the LCD in Fig. 1.
Fig. 34 is a drawing showing an example of a setting screen display which is displayed on the LCD in Fig. 1.
Fig. 35 is a drawing showing a selection button which is used in place of the jog-dial in Fig. 1.

### BEST MODE FOR CARRYING OUT THE INVENTION

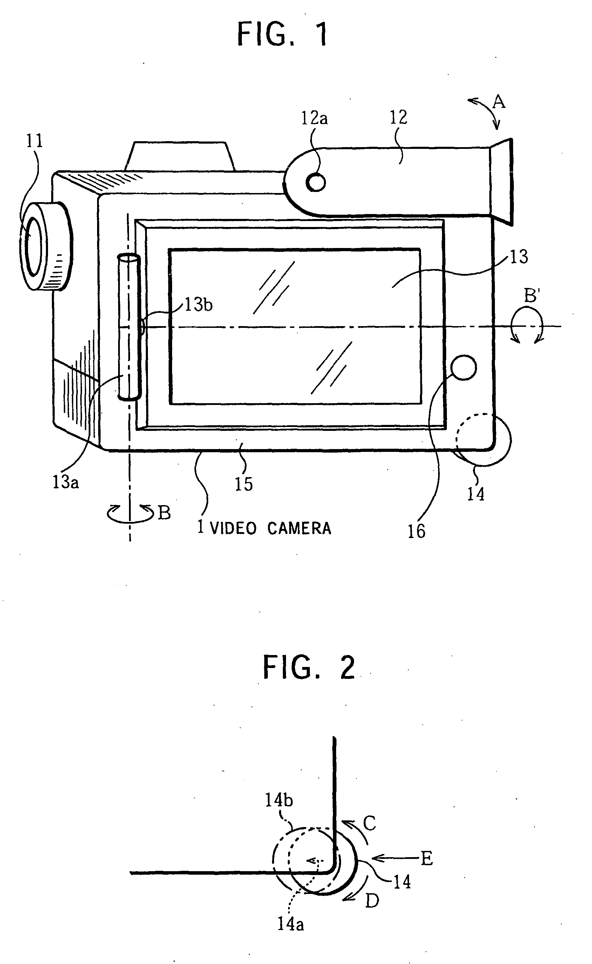

Fig. 1 is an outline view showing the configuration of an embodiment of a video camera 1 according to the present invention. An imaging unit 11 is formed of an optical element such as a lens, etc. and an imaging element such as a CCD (Charge Coupled Device), etc., captures an image of a subject (not shown in the drawing), and outputs a video signal to a built-in circuit in a subsequent stage. An EVF (Electric View Finder) 12 is for checking the content of the image to be captured, and by looking at it, a user can check the image to be captured by the imaging unit 11, which is displayed on a small, built-in display (not shown in the drawing). The EVF 12 is arranged to be freely rotatable about an axis 12a and rotatable in the direction of arrow A with respect to a casing 15 from the state shown in Fig. 1, and can thus be used at any angle which the user desires.

An LCD (Liquid Crystal Display) 13 displays the images captured by the imaging unit 11 and can be rotated about an axis 13a in the direction of arrow B to an angle of approximately 90° with respect to the main unit. Furthermore, when it reaches the open state close to approximately 90° with respect to the casing 15, it is also arranged to be freely rotatable about an axis 13b in the direction of arrow B' to approximately 180°. Therefore, as shown in Fig. 1, the LCD 13 is able to display in the outward direction of the casing 15 of the video camera 1, and also, when the LCD 13 is not being used, it can be folded away against the side of the casing 15.

A jog-dial (rotary/pushbutton operating element) 14 is provided at the bottom end of the casing 15 and, as shown in Fig. 2, can rotate about an axis 14a in the direction of arrows C and D. Furthermore, it can be pressed in the direction of arrow E shown in Fig. 2, and functions as a set (selection) button when put into the state of a jog dial 14b in Fig. 2. Accordingly, by rotating the jog-dial 14 in the direction of arrows C and D, the user can select various settings which are displayed on the setting screen displayed on the LCD 13 described above, and also, by pressing it in the direction of arrow E, the selected processing can be set, thus causing it to be executed. Moreover, a menu button 16 is provided on the side surface of the casing 15, which is pressed by the user to call-up or exit the settings screen.

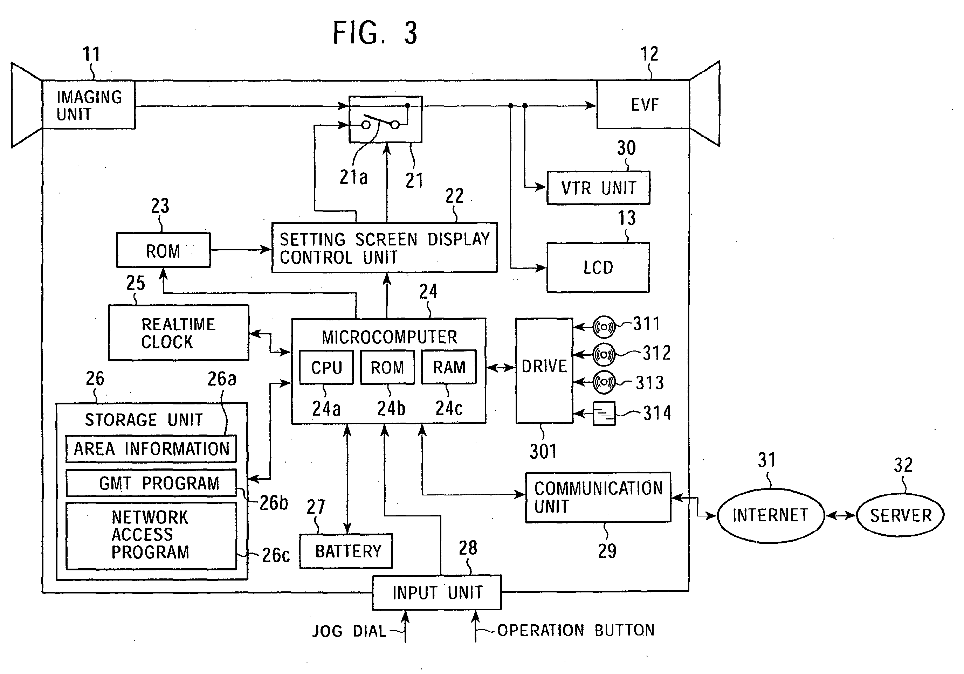

Next, the electrical configuration of the video camera in Fig. 1 is described with reference to Fig. 3.

A combining circuit 21 outputs the video signal input by the imaging unit 11 to the EVF 12, the LCD 13, and a VTR (Video Tape Recorder) unit 30, and in addition, when a switch 21a which is controlled by the setting screen display control unit 22, is switched on, it combines video signals for various setting screens input by the setting screen display control unit 22 with the video signal input by the imaging unit 11 and outputs them to the EVF 12, the LCD 13, and the VTR unit 30.

The setting screen display control unit 22 is controlled by a microcomputer 24 to read video signals for predetermined setting screens from a ROM 23 and output them to the combining circuit 21. The microcomputer 24 is formed of a CPU (Central Processing Unit) 24a, a ROM (Read Only Memory) 24b, and a RAM (Random Access Memory) 24c and controls the overall operation of the video camera 1, and the CPU 24a loads a program stored in the ROM 24b into the RAM 24c as appropriate and executes it. Moreover, the microcomputer 24 reads a program recorded in a magneto-optical disk 311, an optical disk 312, a magneto-optical disk 313, and a semiconductor memory 314, mounted in a drive 301, loads it into the RAM 24c, and executes it, and also records various programs and data. Furthermore, the microcomputer 24 stores various settings information, to be described later, in the internal RAM 24c, reads it as appropriate, and executes it. A real-time clock 25 is controlled by the microcomputer 24 and serves to count the time set inside the video camera 1. It is set by date and time setting processing, to be described later.

The storage unit 26 is formed of a so-called hard disk or the like and stores area information 26a, a GMT program 26b, a network access program 26c, and so on. Regarding the area information 26a, regions are stored therein, which are referred to when performing the date and time setting processing described below, and inside, an region name for each individual region and a time difference with respect to World Standard Time are stored. The GMT program b is a program which calculates World Standard Time, that is to say, Greenwich Mean Time, based on the current time given by the real-time clock 25 for each area, which is set by the date and time setting processing, and the time difference stored in the area information 26a. The network access program 26c is a program that is executed when accessing the server 32 via the Internet 21 by controlling the communication unit 29.

A battery 27 is formed of, for example, a lithium ion battery, etc. and supplies electrical power to the entire video camera 1. An input unit 28 outputs to the microcomputer 24 signals which are input from the jog-dial 14, the menu button 16, other operation buttons that are not shown (buttons for switching the power supply of the video camera 1 on and off and for specifying processes such as play, stop, record, pause and eject), and so on. The communication unit 29 is formed of a modem or the like and is controlled by the microcomputer 24 to access the server 32 via the Internet 31 for sending and receiving various kinds of data. The VTR unit 30 is controlled by the microcomputer 24 and records the video signal input by the combining circuit 21 onto a video cassette tape (not shown), which is the recording medium. In addition, it reads the video signal recorded on the video cassette tape and outputs it to the EVF 12 or the LCD 13 for display thereon.

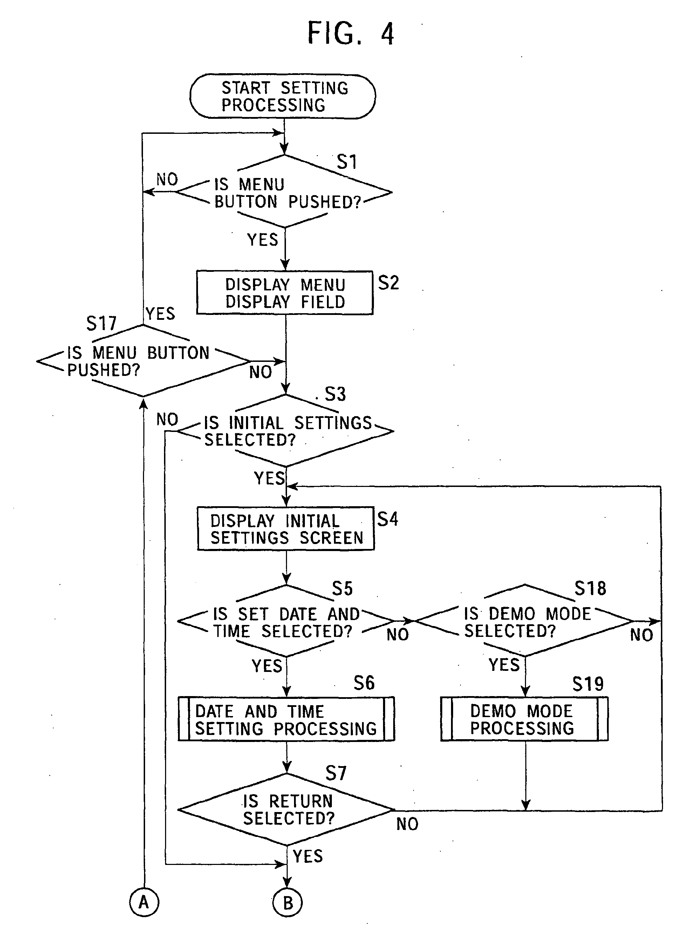

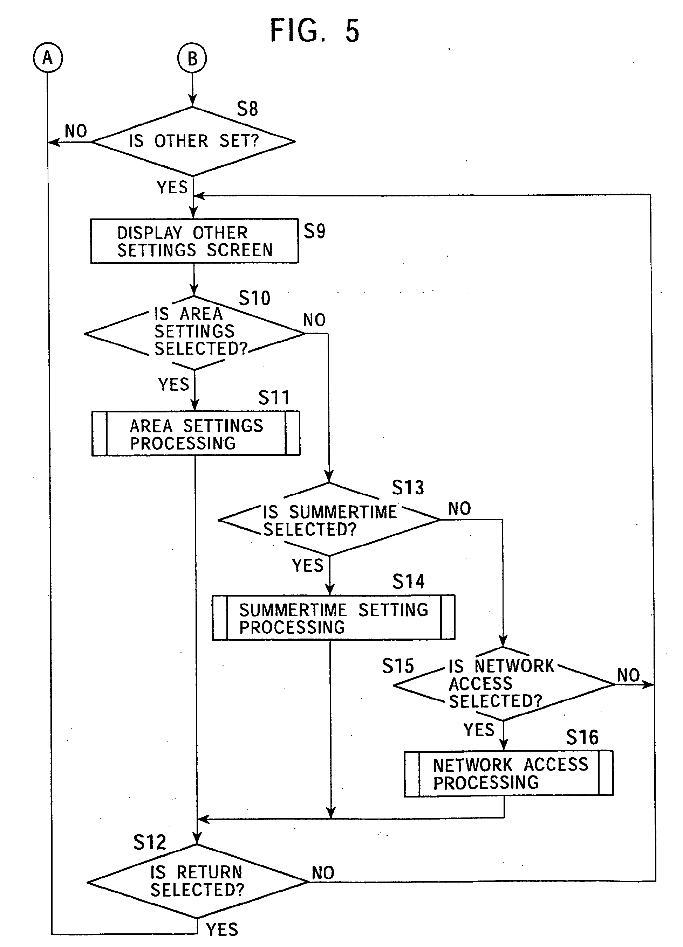

Next, setting processing is described with reference to the flowcharts in Figs. 4 and 5.

In step S1, the microcomputer 24 determines whether or not the menu button 16 is pushed through the input unit 28, and repeats this processing until it is pushed. When it is determined that it is pushed, the processing proceeds to step S2.

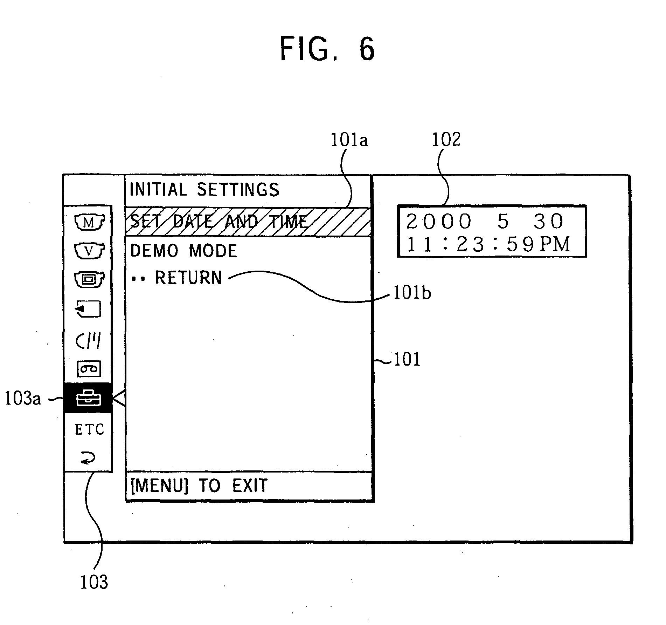

In step S2, the microcomputer 24 controls the setting screen display control unit 22 and sends an instruction for displaying a menu screen which is stored in the ROM 23. At this time, the setting screen display control unit 22 reads out a video signal for the menu screen from the ROM 23, then, by controlling the switch 21 of the combining circuit 21 to switch on, outputs it to the EVF 12 and the LCD 13, and displays a menu display field 103, which is shown in Fig. 6. Icons by which various operations can be selected are displayed in the menu display field 103 in Fig. 6, and it is possible to select the processing with a cursor 103a which can move up and down using the jog-dial 14.

In step S3, the microcomputer 24 determines whether or not an icon representing initial settings in the menu display field 103 is selected. For example, as shown in Fig. 6, if the jog-dial 14 is operated in the direction of arrows C and D so that the cursor 103a provided on the menu display field 103 moves, and is pushed in the direction of arrow E at the position of the icon indicating initial settings (in the present case, the seventh icon from the top of the menu display field 103 in Fig. 6 is the icon indicating initial settings) to select it, the microcomputer 24 controls the setting screen display control unit 22 to read out from the ROM 23 a video signal corresponding to an initial settings list 101 shown in Fig. 6, and then switches on the switch 21a of the combining circuit 21 to display the signal on the LCD 13. In the present case, a "set date and time" display field 101a, a "demo mode" display field, and a "return" display field 101b are displayed on the initial settings list 101 shown in Fig. 6. Also, a time display field 102 is displayed at the right-hand side of the initial settings list 101, where the current time is displayed. In the present case, "2000 5 30 11:23:59 PM" is displayed in the time display field 102, which indicates that the present time is "30th May, 2000, 11:23:59 PM". The cursor, which is inverted to indicate which of the various display fields is displayed, is shown on the initial settings list 101. This cursor can be made to move up and down with the rotation of the jog-dial 14 in the direction of arrow C or in the direction of arrow D in Fig. 2, and the various processes can be selected, and therefore it is possible to set a process by pushing the jog-dial in the direction of arrow E in Fig. 2, thus causing it to be executed. In the present case, the cursor is located at the set date and time display field 101a. Herein, the method of operating the cursor is the same for the other setting screens, too.

In step S5, the microcomputer 24 determines whether or not "set date and time" is selected. For example, as shown in Fig. 6, in the case where the cursor is moved using the jog-dial 14 to select (set) the "set date and time" display field 101a, date and time setting processing is executed in step S6.

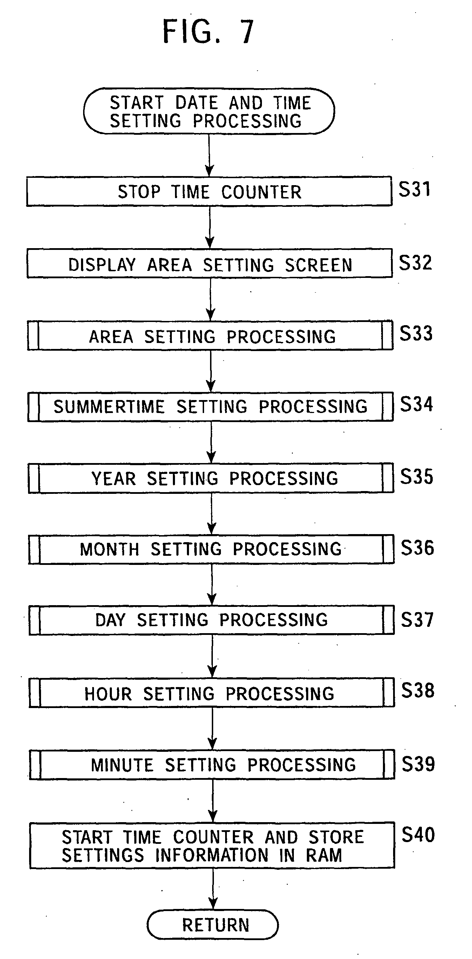

Here, the date and time setting processing will be described with reference to the flowchart in Fig. 7.

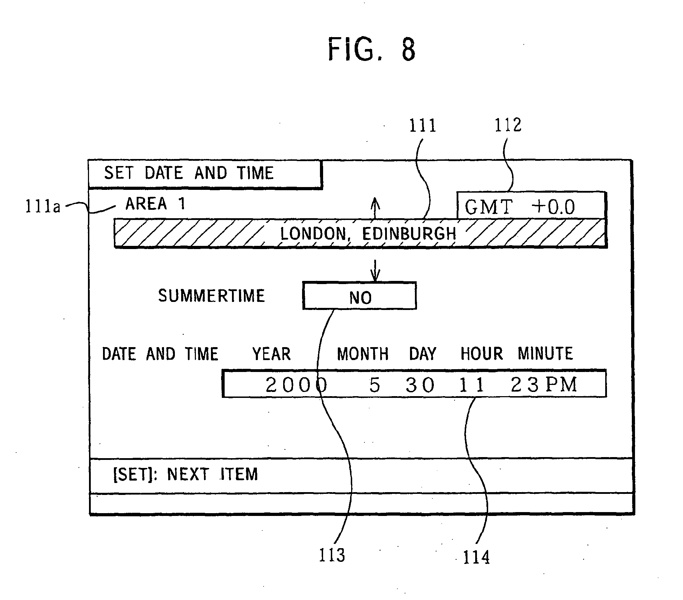

In step S31, the microcomputer 24 controls the real-time clock 25 to stop the time counter. In step S32, the microcomputer 24 controls the setting screen display control unit 22 to display the area setting screen shown in Fig. 8 on the LCD 13 (the same video signal is also displayed on the EVF 12).

An area selection field 111 is displayed on the area setting screen shown in Fig. 8, and it is possible to select the desired area from a plurality of areas registered in advance in the area information 26a in the storage unit 26 by using the jog-dial 14. In the present case, "London, Edinburgh" is shown as being selected on the area setting screen. To the upper left of the area selection field 111, an area-number display field 111a is provided, in which a number corresponding to the area displayed in the area selection field 111 is displayed. In the present case, "Area 1" is displayed in the area-number display field 111a, which indicates that the area number corresponding to "London, Edinburgh", which is selected by the area selection field 111, is "Area 1". In this example, the number of areas registered in the area information 26a is 29; however, it is also possible to register a number other than 29, thus allowing other ones to be registered and unnecessary areas to be removed.

To the upper right of the area selection field 111, a GMT time-difference display field 112 is displayed, in which the time difference with respect to World Standard Time is displayed. The time difference displayed in the GMT time-difference display field 112 is registered in advance in the area information 26a and is displayed according to the area displayed in the area selection field 111. In the present case, "GMT +0.0" is displayed in the GMT time-difference display field 112, which indicates that the time for the area "London, Edinburgh" displayed in the area selection field 111 has no time difference, that is, it is the same as World Standard Time.

A summertime selection field 113, which indicates whether or not summertime is in effect, is provided below the area selection field 111, and it is thus possible to select whether or not summertime is in effect. In the present case, "No" is displayed in the summertime selection field 113, which indicates that summertime mode is not set. A date and time selection field 114 is provided below the summertime selection field 113, and it is thus possible to set the date and time which are set. In the present case, in the date and time selection field 114, "2000" is displayed in the year field, "5" is displayed in the month field, "30" is displayed in the day field, "11" is displayed in the hour field, which is indicated by "hour", "23" is displayed in the minute field, and "PM" is displayed in the field indicated AM/PM, which indicates that the current time is 30th May, 2000, 11:23 PM. If the area selection field 111, the summertime selection field 113, and the date and time selection field 114 are in a state in which they can be selected using the jog-dial 14, that is to say, in an active state, they are displayed as highlighted. In the present case, the area selection field 111 is active, which is indicated by the fact that it is displayed as highlighted (the background in the field is displayed in a different color from the other fields).

In step S33, the microcomputer 24 executes area setting processing.

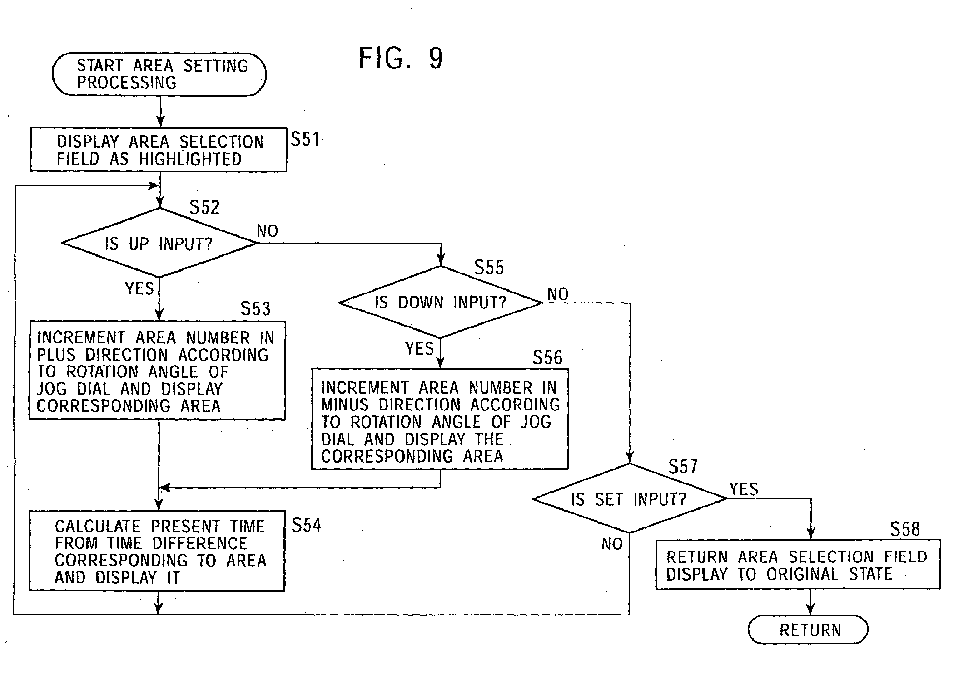

Here, the area setting processing will be described with reference to the flowchart in Fig. 9.

In step S51, the microcomputer 24 controls the setting screen display control unit 22 to highlight the area selection field 111, as shown in Fig. 8.

In step S52, the microcomputer 24 determines whether or not UP is input using the jog-dial 14. For example, if it is detected that the jog-dial 14 has rotated by a predetermined rotation angle in the direction of arrow C shown in Fig. 2, it is determined that UP has been input and the processing then proceeds to step S53.

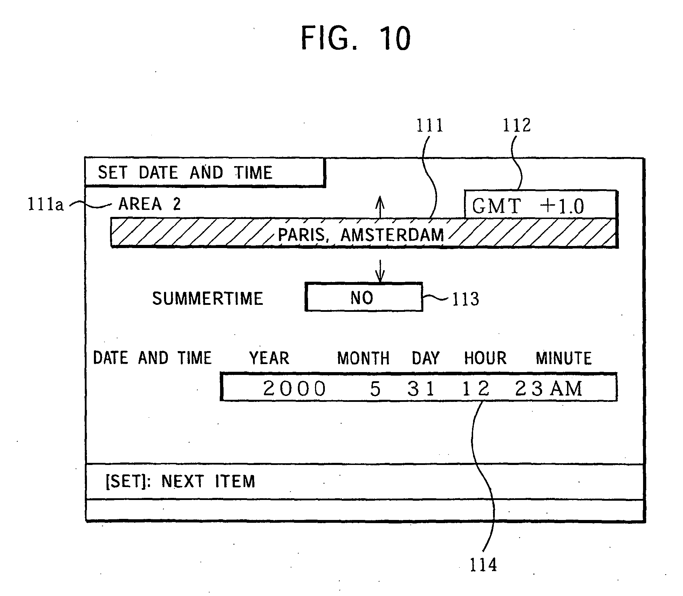

In step S53, the microcomputer 24 increments the area number in the plus direction according to the rotation angle of the jog-dial 14, displays the corresponding area number in the area-number display field 111a, and then displays the area corresponding to that area number in the area selection field 111. In the present case, for example, when the jog dial is rotated by an amount which increments the area number by 1, as shown in Fig. 10, "Paris, Amsterdam" is displayed in the area display field 111, "Area 2" is displayed in the area-number display field 111a, and "GMT +1.0" is displayed in the GMT time-difference display field 112, which indicates that the area corresponding to Area 2, the area number having been incremented by 1, is "Paris, Amsterdam", and that there is a time difference of +1 hour with respect to World Standard Time.

In step S54, the microcomputer 24 calculates the current time according to the time difference displayed in the GMT time-difference display field 112, displays it in the date and time selection field 114, and the processing then returns to step S52. In other words, in the present case, since the time difference is +1.0 hour, then 31st May, 2000, 12:23 AM, which is 30th May, 2000, 11:23 PM plus one hour, which is the date and time shown in the date and time selection field 114 in Fig. 8, is displayed in the date and time display field 114 in Fig. 10.

If UP is input in step S52, in step S55, the microcomputer 24 determines whether or not DOWN is input using the jog-dial 14. For example, if it is detected that the jog-dial 14 has rotated in the direction of arrow D shown in Fig. 2 by a predetermined rotation angle, the processing proceeds to step S56.

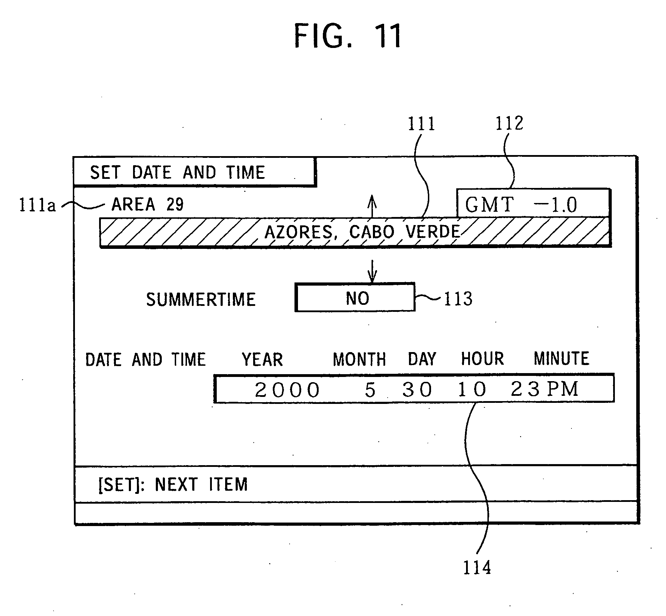

In step S56, the microcomputer 24 increments the area number in the minus direction according to the rotation angle of the jog-dial 14, displays the corresponding area number in the area-number display field 111a, and then, after displaying the area corresponding to that area number in the area selection field 111, the processing proceeds to step S54. For example, when the jog-dial 14 is made to rotate by an amount for incrementing the area number by -1, as shown in Fig. 11, "Azores, Cabo Verde" is displayed in the area display field 111, "Area 29" is displayed in the area-number display field 111a, and "GMT -1.0" is displayed in the GMT time-difference display field 112, which indicates that the area corresponding to Area 29, which was obtained by incrementing the area number by -1, is "Azores, Cabo Verde", and that there is a time difference of -1 hour with respect to World Standard Time.

In step S55, when it is determined that DOWN is not input, in step S57, the microcomputer 24 determines whether or not SET is input using the jog-dial 14. For example, if SET is not input, in other words, if it is determined that the jog-dial 14 is not pressed in the direction of arrow E shown in Fig. 2, the processing returns to step S52 and the processing thereafter is repeated. If it is determined that SET is input in step S57, in step S58, the microcomputer 24 returns the highlighted display of the area selection field 111 to its original state and, after completing that processing, proceeds to step S34 in Fig. 7.

Here, we return to the description of the flowchart in Fig. 7.

In step S34, the microcomputer 24 executes summertime setting processing.

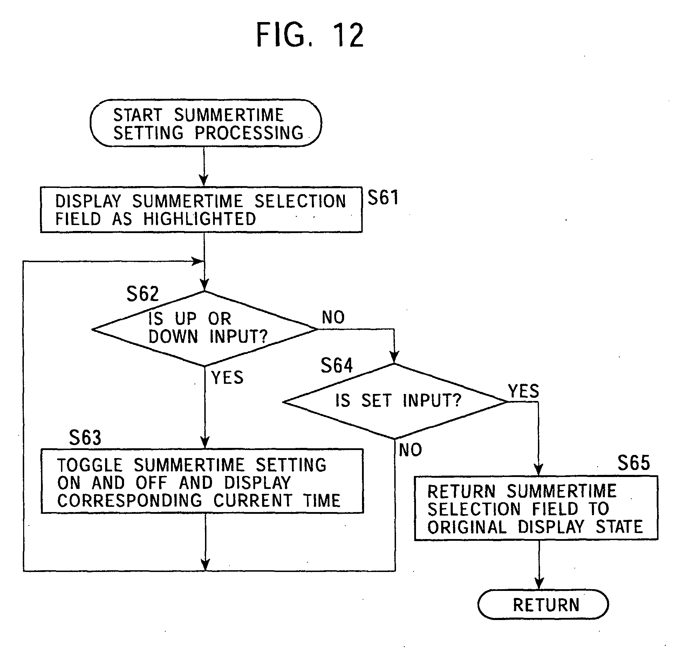

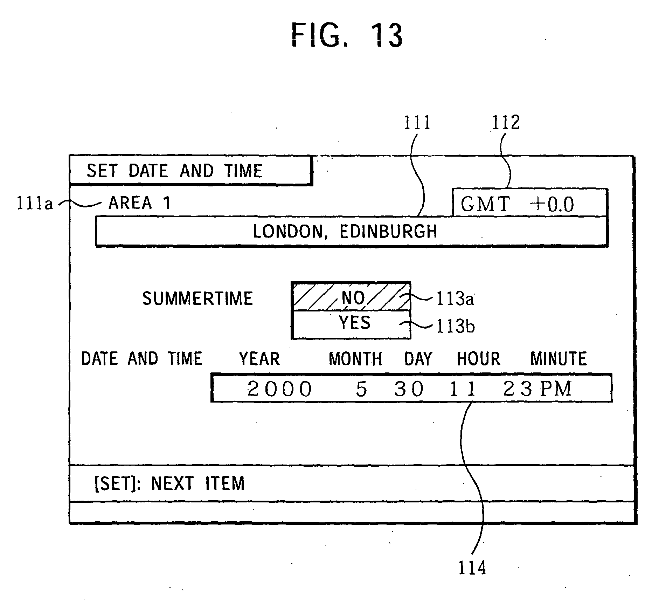

Here, the summertime setting processing will be described with reference to the flowchart in Fig. 12. In step S61, the microcomputer 24 controls the setting screen display control unit 22 to display the summertime selection field 113 in a format wherein, as shown in Fig. 13, "No" is displayed in a summertime selection field 113a and "Yes" is displayed in a summertime selection field 113b, and the selected state is displayed as highlighted. In the present case, for example, as shown in Fig. 13, since the summertime selection field 113a, in which "No" is displayed, is highlighted, the not-summertime mode is selected.

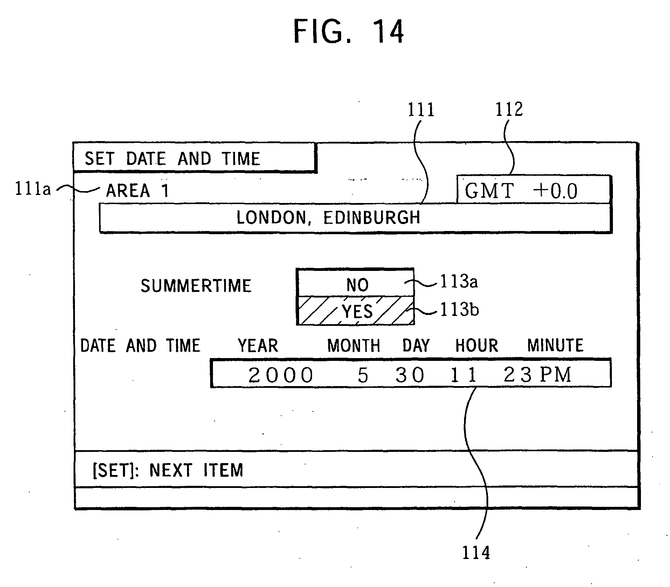

In step S62, the microcomputer 24 determines whether or not UP or DOWN is input using the jog-dial 14. For example, if it is determined that the jog-dial 14 is rotated by a predetermined rotation angle either in the direction of arrow C or in the direction of arrow D in Fig. 2, in step S63, the microcomputer 24 controls the setting screen display control unit 22 to change the highlighting of the summertime selection field 113 and then displays the current time shown in the current date and time selection field 114 by changing it depending on whether or not summertime is in effect. In other words, in the present case, as shown in Fig. 14, it changes the highlighting of the summertime selection field 113a, in which "No" is displayed, to the summertime selection field 113b, in which "Yes" is displayed, and also, it changes the time displayed in the date and time selection field 114 to the summertime time, that is to say, it changes the display from 30th May, 2000, 11:23 PM, when summertime is not in effect, as shown in Fig. 13, to 31st May, 2000, 12:23 AM, when summertime is in effect, as shown in Fig. 14. If the jog-dial 14 is operated in the same way as described above in the state shown in Fig. 14, the opposite processing is executed, and the display is changed from the summertime time to the not-summertime time.

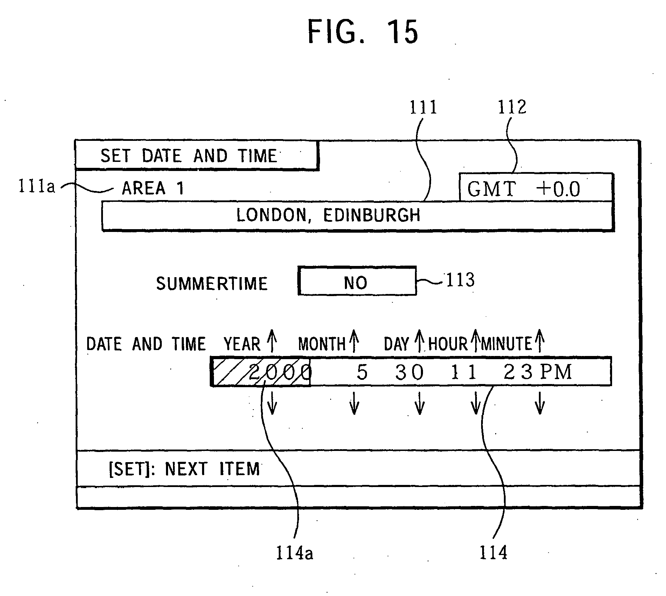

If UP or DOWN is not input in step S62, in step S64, it is determined whether or not SET is input, and when it is determined that SET is not input, the processing returns to step S62. If it is determined in step S64 that SET is input, in step S65, the microcomputer 24 returns the summertime selection field 113 to its original display state and, after completing that processing, proceeds to step S35 in Fig. 7. That is to say, if SET is input in the state shown in Fig. 13, as shown in Fig. 15, the not-summertime mode, in which "No" is displayed in the summertime selection field 113, is set and the display is returned to its original state. Also, in the same way, if SET is input in the state shown in Fig. 14, the summertime mode, in which "Yes" is displayed in the summertime selection field 113, is set and the display is returned to its original state.

Here, we return to the description of the flowchart in Fig. 7.

In step S35, the microcomputer executes year setting processing.

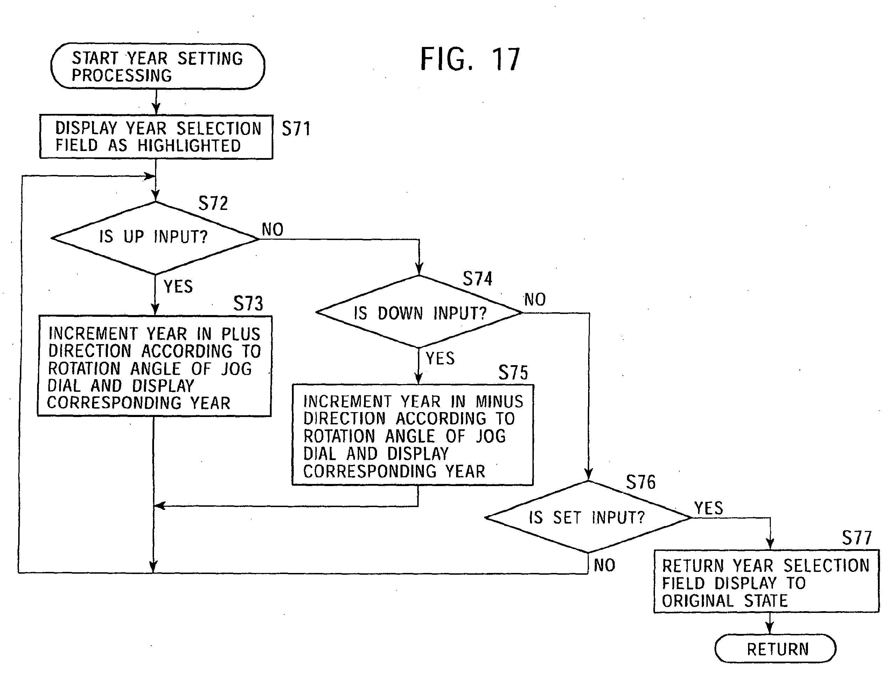

Here, the year setting processing is described with reference to the flowchart in Fig. 17. In step S71, the microcomputer 24 controls the setting screen display control unit 22 to display a year selection field 114a in the date and time selection field 114 as active, in other words, it displays it as highlighted. For example, as shown in Fig. 13, if the year setting processing is executed when the summertime selection field 113 is "No", in other words, in the not-summertime mode, the year number set until that point, in other words, "2000", is displayed as highlighted, as shown in Fig. 15.

In step S72, the microcomputer 24 determines whether or not UP is input using the jog-dial 14. For example, if it is detected that the jog-dial 14 rotates by a predetermined rotation angle in the direction of arrow C shown in Fig. 2, then it determines that UP is input, and the processing proceeds to step S73.

In step S73, the microcomputer 24 increments the year number in the + direction according to the rotation angle of the jog-dial 14, and then displays the corresponding year number in the year selection field 114a and the processing returns to step S71. In other words, in the present case, since "2000" is displayed in the year selection field 114a the display changes to 2001, 2002, 2003, ... according to the rotation angle of the jog-dial 14.

When it is determined in step S72 that UP is not input, in step S74, the microcomputer 24 determines whether or not DOWN is input using the jog-dial 14. For example, if it is detected that the jog-dial 14 rotates by a predetermined rotation angle in the direction of arrow D shown in Fig. 2, it determines that DOWN is input, and the processing proceeds to step S75.

In step S75, the microcomputer 24 increments the area number in the - direction according to the rotation angle of the jog-dial 14, displays the corresponding year number in the year selection field 114a, and then the processing returns to step S71. In other words, in the present case, since "2000" is displayed in the year selection field 114a, the display is changed to 1999, 1998, 1997, ... according to the rotation angle of the jog-dial 14.

If it is determined in step S74 that DOWN is not input, in step S76, the microcomputer 24 determines whether or not SET is input using the jog-dial 14. For example, if it is determined that the jog-dial 14 is not pressed in the direction of arrow E in Fig. 2 (SET is not input), then the processing returns to step S72 and the processing thereafter is repeated. If it is determined in step S76 that SET is input, in step S77, the microcomputer 24 returns the year selection field 114a to its original display state and sets the year number displayed at that time in the year selection field 114a. In addition, when that processing is completed, the processing proceeds to step S36 in Fig. 7.

Here we return to the description of the flowchart in Fig. 7.

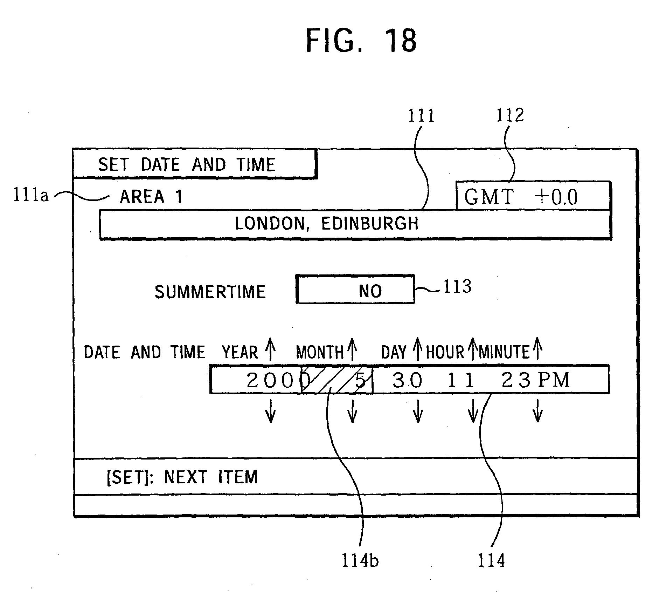

In step S36, month setting processing is executed. In other words, as shown in Fig. 18, a month selection field 114b in the date and time selection field 114 is displayed as highlighted, and the month is set using the jog-dial 14. In the present case, "5" is displayed in the month selection field 114b, which indicates that the month is set to May. Since the setting in the month setting processing is the same as the processing in the year setting processing described with reference to the flowchart in Fig. 17, a description thereof is omitted.

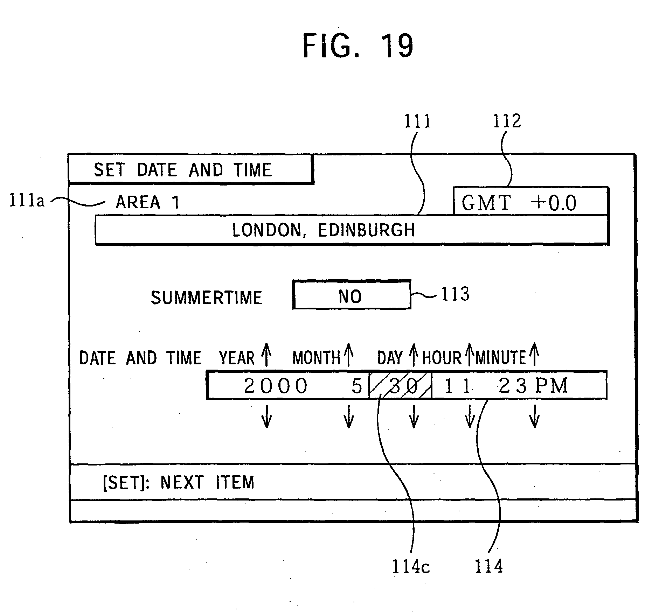

Day setting processing is executed in step S37. That is to say, as shown in Fig. 19, a day selection field 114c in the date and time selection field 114 is displayed as highlighted and the day is set using the jog-dial 14. In the present case, "30" is displayed in the day selection field 114c, which indicates that the 30th is set. Since the setting in the day setting processing is the same as the processing in the year setting processing described with reference to the flowchart in Fig. 17, a description thereof is omitted.

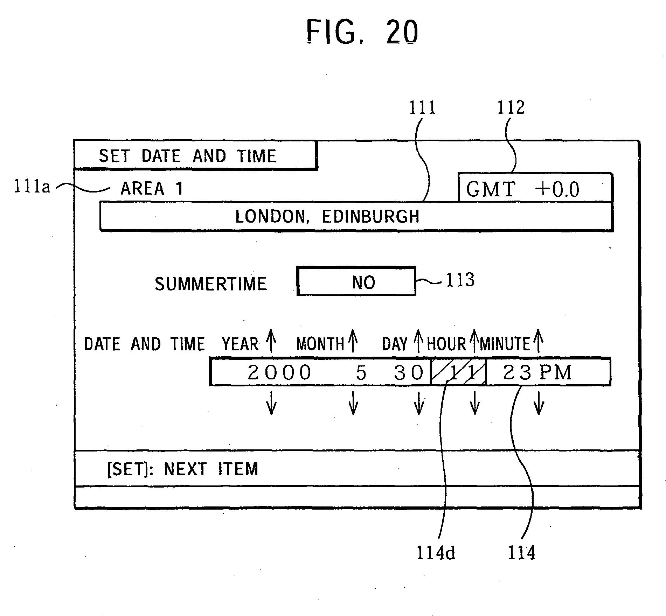

Hour setting processing is executed in step S38. That is to say, as shown in Fig. 20, an hour selection field 114d in the date and time selection field 114 is displayed as highlighted and the hour is set using the jog-dial 14. In the present case, "11" is displayed in the hour selection field 114d, which indicates that 11 o'clock is set. "AM", if it's before noon, or "PM", if it's after noon, is displayed at the right end of the date and time selection field 114 according to the hour set in the hour selection field 114d. In the present case, "PM" is displayed, which indicates that it is afternoon. Since the setting in the hour setting processing is the same as the processing in the year setting processing described with reference to the flowchart in Fig. 17, a description thereof is omitted.

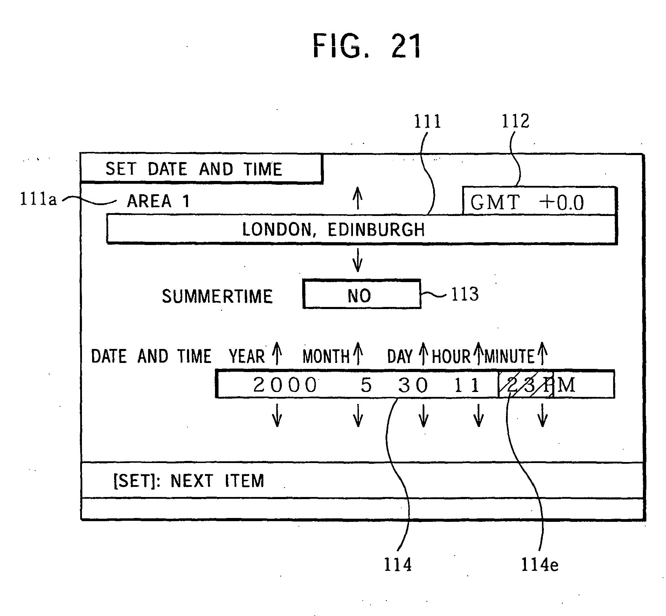

Minute setting processing is executed in step S39. That is to say, as shown in Fig. 21, a minute selection field 114e in the date and time selection field 114 is displayed as highlighted and the minutes are set using the jog-dial 14. In the present case, "23" is displayed in the minute selection field 114e, which indicates that 23 minutes is set. Since the setting in the minute setting processing is the same as the processing in the year setting processing described with reference to the flowchart in Fig. 17, a description thereof is omitted.

In step S40, the microcomputer 24 controls the real-time clock 25 to start counting time from the time that was set and displays the initial settings screen on the LCD 13, in which the initial settings list 101 shown in Fig. 6 is displayed. In addition, it stores in the built-in RAM 24c the selected area (including corresponding time-difference information stored in the area information 26a) and settings information indicating whether or not summertime is in effect. The processing then proceeds to step S7 in Fig. 4. When the counter of the real-time clock 25 starts, the seconds of the current time are set to zero at the point in time when the counter starts.

Here we return to the description of the flowchart in Figs. 4 and 5.

In step S7, the microcomputer 24 determines whether or not a return display field 101b is selected; if it determines that the return display field 101b is not selected, the processing returns to step S4 and if it determines that the return display field 101b is selected, the processing proceeds to step S8.

In step S8 (Fig. 5), the microcomputer 24 determines whether or not the jog-dial 14 is operated to move the cursor to the position of OTHER from the menu display field 103 on the setting screen and whether it is selected (SET) ; if OTHER is selected, the processing proceeds to step S9.

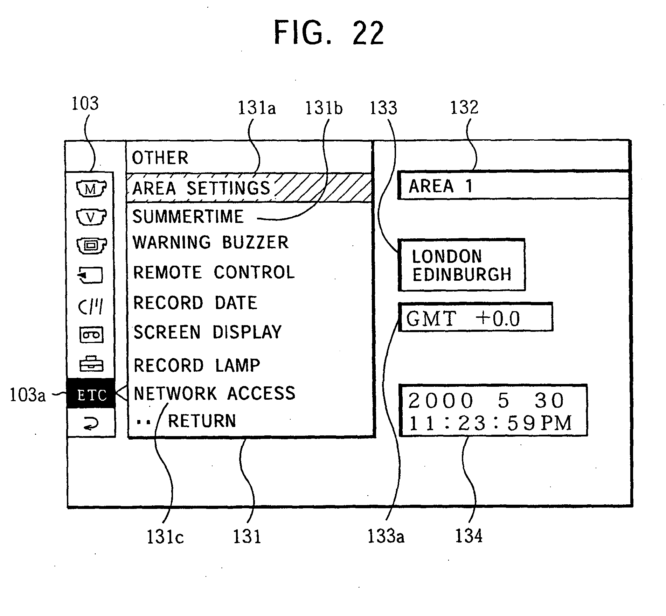

In step S9, the microcomputer controls the setting screen display control unit 22 to display the "OTHER" setting screen, as shown in Fig. 22. As shown in Fig. 22, an other settings list 131 is displayed on the "OTHER" setting screen, in which various setting items are displayed. In the present case, the icon indicating "OTHER" settings is the eighth icon from the top of the diagram of the menu display field 103. Also, an area setting display field 131a, a summertime setting display field 131b, a warning buzzer display field, a screen display display field, a record lamp display field, a network access display field 131c, and a return display field are displayed in the other settings list 131, from the top, and it is possible to select the processing for the various settings. Here, only the area setting, summertime setting, and network access processing, which are related to the time information, are described.

In step S10, the microcomputer 24 determines whether or not the area setting display field 131a is selected. For example, as shown in Fig. 22, if the area setting display field 131a is selected and set using the jog-dial 14, the processing proceeds to step S11. In step S11, area setting processing is executed. This area setting processing is the same processing as described with reference to the flowchart in Fig. 8, however, since the display screen is different, a description of that processing is omitted and the display screen is described.

As shown in Fig. 22, if the area setting display field 131a is highlighted using the jog-dial 14, an area number display field 132 is displayed at the upper right of the screen, where, in the present case, "Area 1" is displayed. Below that, an area display field 133 is displayed, which in the present case displays "London, Edinburgh". Below that, a GMT time-difference display field 133a is displayed, which, in conjunction with the area display field 133, displays the corresponding time difference with respect to World Standard Time. In the present case, "GMT +0.0" II is displayed, which indicates that there is no time difference with respect to World Standard Time. Also, below that, a date and time display field 134 is displayed, in which is displayed the date and time set in the date and time setting processing in the initial settings. In the present case, it is shown in the date and time display field 134 that the current time is "30th May, 2000, 11:23:59 PM".

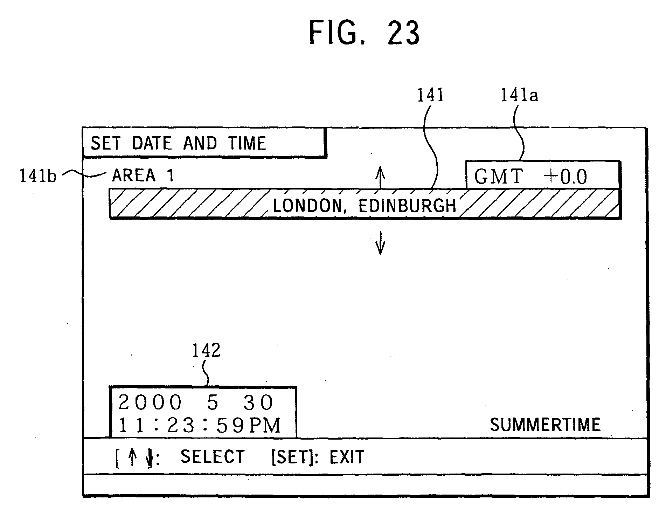

If SET is input in this state using the jog-dial 14, in other words, if the area setting display field 131a is selected, as shown in Fig. 23, an area selection field 141 is displayed, to the upper right thereof, a GMT time-difference display field 141a is displayed, and to the upper left thereof an area-number display field 141b is displayed. These correspond to the area selection field 111, the area-number display field 111a, and the GMT time-difference display field 112 of Fig. 8, respectively. Moreover, a date and time display field 142 is displayed to the lower left of the area selection field 141, and this corresponds to the date and time display field in Fig. 8.

In the present case, "London, Edinburgh" is displayed in the area selection field 141, "GMT +0.0" is displayed in the GMT time-difference display field 141a, "Area 1" is displayed in the area-number display field 141b, and "30th May, 2000, 11:23:59 PM" is displayed in the date and time display field 142. The difference from when the initial settings are carried out is that this processing is carried out without stopping the time counter, and right down to the seconds unit is displayed in the date and time display field 142. In other words, based on the time set when the initial settings were made, when, for example, going away on overseas travel with the video camera 1, by changing only the area setting and without stopping the time counter, it is possible to set the camera to the time zone for the country traveled to.

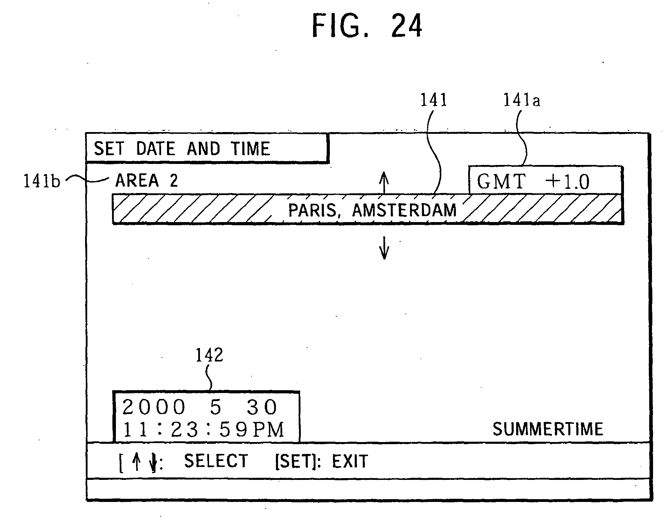

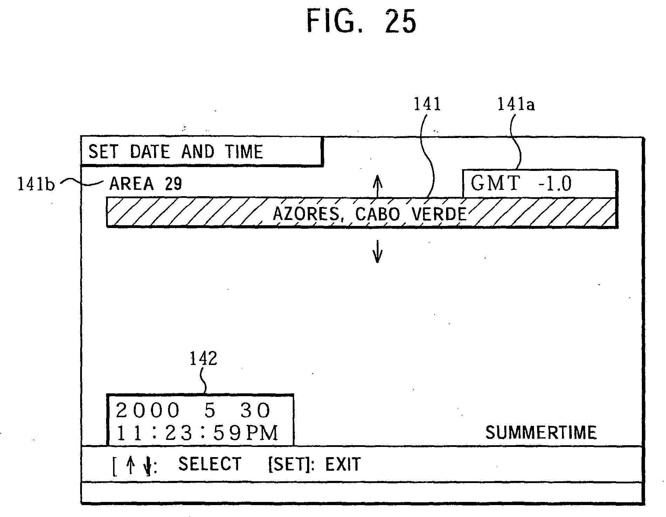

Since the area display field 141 is the only part which can be set on the display screen in Fig. 23, only the area display field 141 is displayed as highlighted. In this state, if, for example, the jog-dial 14 is rotated in the up direction (in the direction of arrow C in Fig. 2) by a corresponding angle for incrementing the area number by 1, as shown in Fig. 24, the display in the area selection field 141 is changed to display "Paris, Amsterdam", and furthermore, "GMT +1.0" is displayed in the GMT time-difference display field 141a, which indicates that there is a +1 hour time difference, the display in the date and time display field 142 indicates, by carrying out processing corresponding to this time difference, "31st May, 2000, 12:23:59 PM". In other words, when taking this video camera to Paris, for example, after performing date and time setting, using the initial settings, in London, by carrying out this processing, it is possible to change it to the date and time display corresponding to the time difference without performing date and time setting using the initial settings. Moreover, if it is rotated by an angle corresponding to that for incrementing the area number by -1, as shown in Fig. 25, the display in the area selection field 141 is changed to display "Azores, Cabo Verde", and furthermore, "GMT -1.0" is displayed in the GMT time-difference display field 141a, which indicates that there is a -1.0 hour time difference, and the display in the date and time display field indicates, by carrying out processing corresponding to this time difference, "30th May, 2000, 10:23:59 PM". In other words, when taking this video camera to the Azores, for example, after performing date and time setting, using the initial settings, in London, by carrying out this processing, it is possible to change it to the date and time display corresponding to the time difference without performing date and time setting using the initial settings.

Here we return to the description of the flowchart in Figs. 4 and 5.

In step S12 (Fig. 5), it is determined whether or not RETURN is selected and if, for example, RETURN is not selected, the processing returns to step S9.

If the area setting display field 131a is not selected in step S10, in step S13, it is determined whether or not the summertime display field 131b is selected, and if it is determined that the summertime display field 131b is selected, after executing summertime setting processing in step S14, the processing proceeds to step S12. This summertime setting processing is the same as the processing that was described with reference to the flowchart in Fig. 12; however, since the display screen is different, that processing is omitted and the display screen is described.

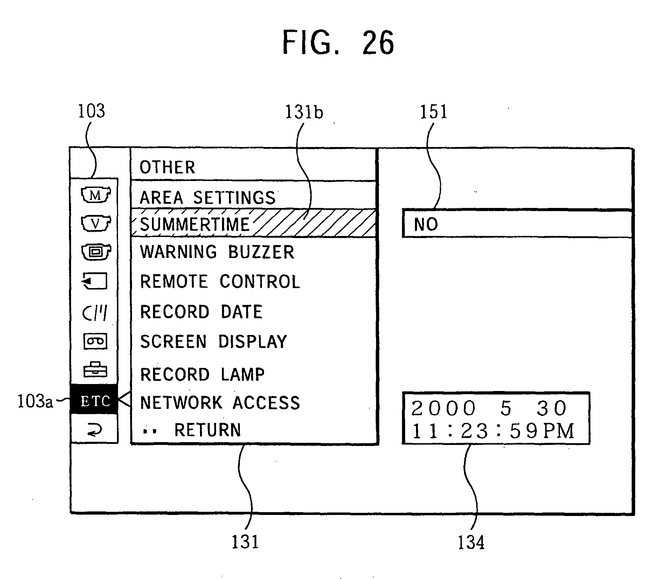

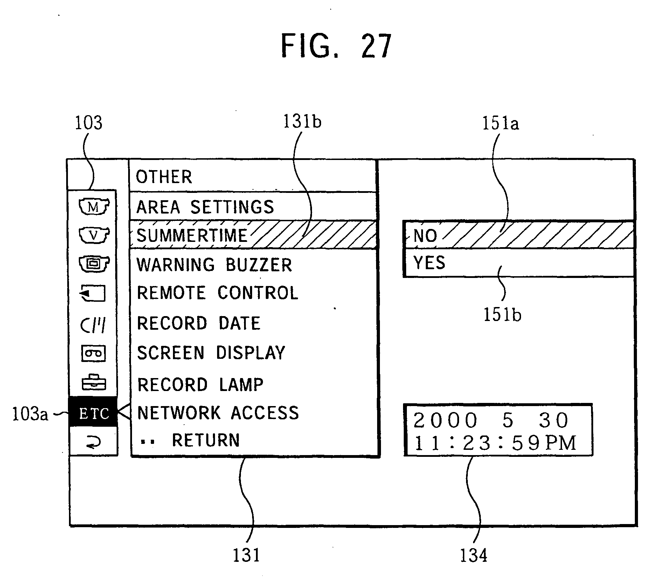

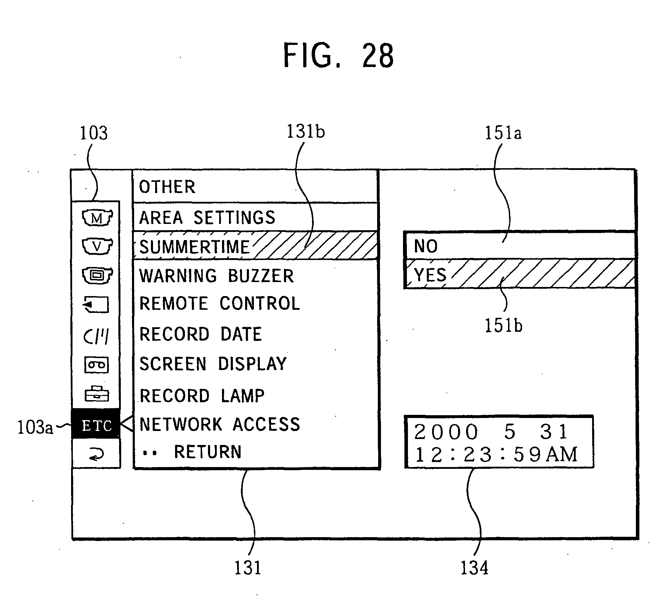

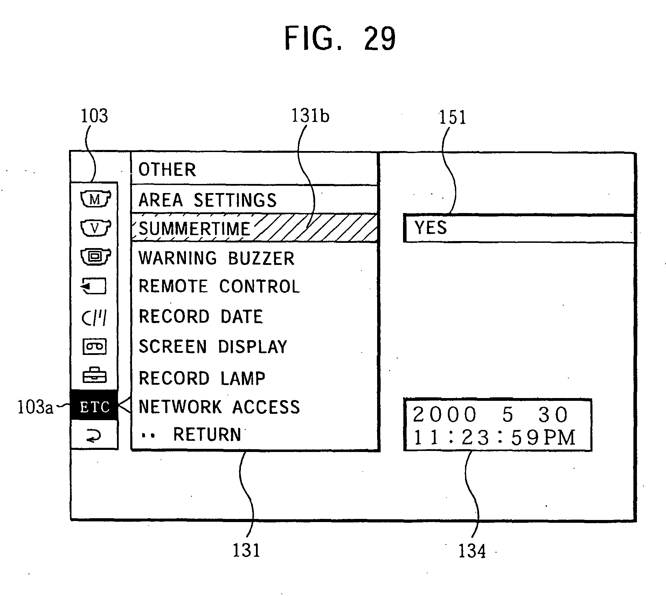

As shown in Fig. 26, the summertime display field 131b is highlighted using the jog-dial 14, and a summertime selection field 151 is displayed at the right of the display screen, in which the current summertime setting is displayed. In this state, if the jog-dial 14 is pressed in the direction of the arrow E in Fig. 2, as shown in Fig. 27, the summertime selection field 151 changes to display a summertime selection field 151a, in which "No" is displayed, and a summertime selection field 151b, in which "Yes" is displayed, and highlighting is used for indicating that summertime setting is possible. In the present case, the summertime selection field 151a, in which "No" is displayed, is highlighted. If the jog-dial 14 is rotated in this state in the direction of arrow C or in the direction of arrow D in Fig. 2, as shown in Fig. 28, the summertime selection field 151b, in which "Yes" is displayed, is highlighted. At this time, since summertime is set, in Fig. 27, a display indicating "30th May, 2000, 11:23:59 PM" appears in the date and time display field 134; however, due to the fact that summertime is set, as shown in Fig. 28, the display in the date and time display field 134 is changed to that indicating "31st May, 2000, 12:23:59 AM". If the jog-dial 14 is pressed in this state in the direction of arrow E in Fig. 2, in other words, if the summertime selection field 151b in which "Yes" is displayed is selected, as shown in Fig. 29, the fact that summertime is in effect is set.

Here we return to the description of the flowchart in Figs. 4 and 5.

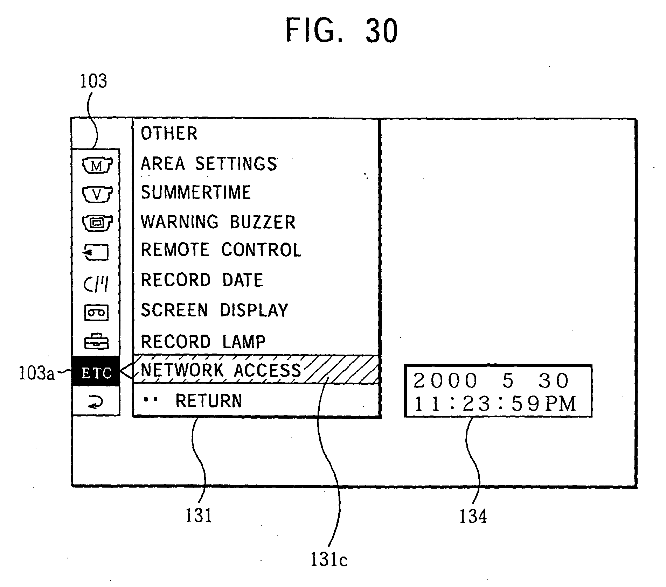

When the summertime setting display 131b is not selected in step S13 (Fig. 5), in step S15, it is determined whether or not network access is selected. In step S15, as shown, for example, in Fig. 30, if a network access display field 131c is highlighted using the jog-dial 14, then network access processing is executed in step S16.

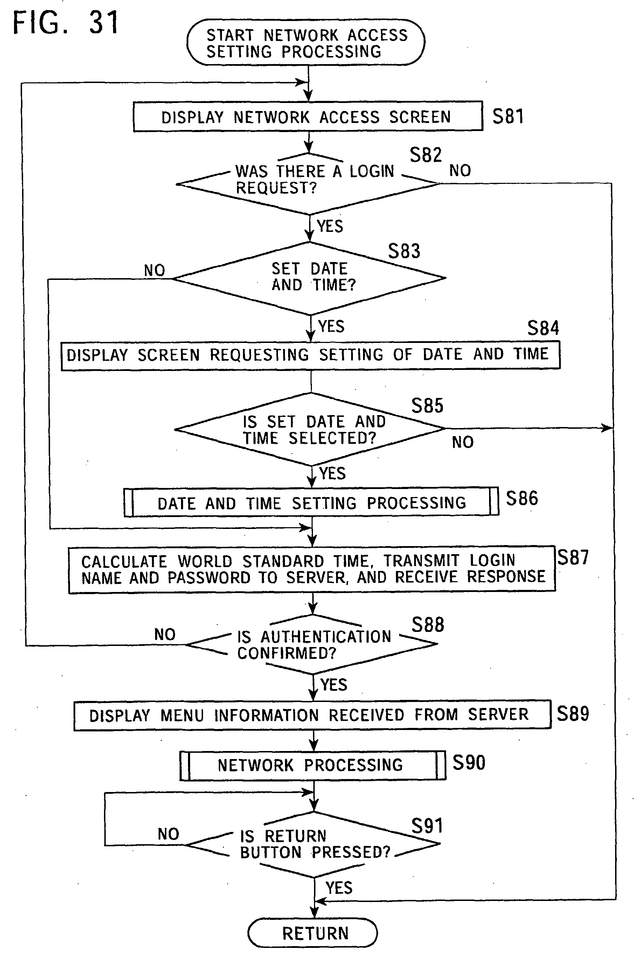

Here, the network access processing is described with reference to the flowchart in Fig. 31.

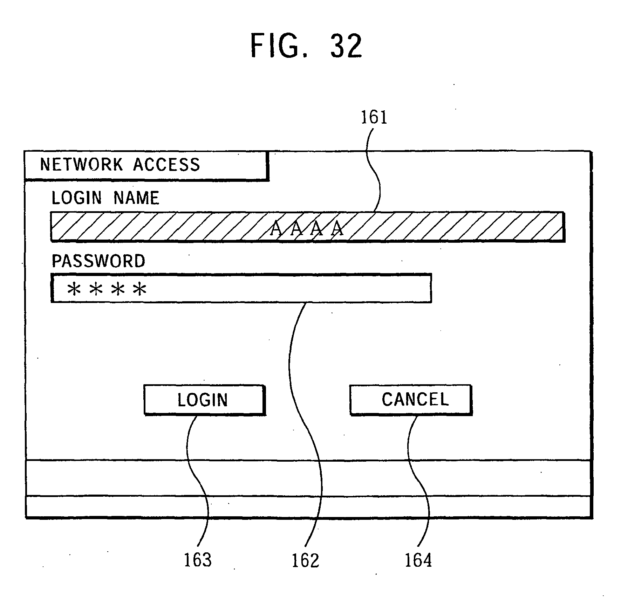

In step S81, the microcomputer 24 starts up a network access program 26c and, as shown in Fig. 32, displays a network access processing display screen on the LCD 13. A login name input field 161 is displayed at the upper portion of the display screen and, while highlighted, it is possible to input the characters of a login name using the jog-dial 14 or other buttons that are not shown in the figure. A password input field 162 is provided below the login name input field 161, and it is possible to input a password using the jog-dial 14 or other buttons that are not shown in the figure. A login button 163 is provided below the password input field 162, at the left, and when the user requests login, he or she can select it and press it using the jog-dial 14. A cancel button 164 is provided below the password input field 162, at the right, and when the user wants to cancel the processing, he or she can operate the jog-dial 14 to select it and press it. When the login name input field 161, the password input field 162, the login button 163, and the cancel button 164 are selected using the jog-dial 14, they are highlighted and input becomes possible.

In step S82, the network access program 26c determines whether or not there was a login request. For example, if it is determined that a predetermined login name and password are input into the login name input field 161 and the password input field 162 and the login button 163 is pressed, the processing proceeds to step S83.

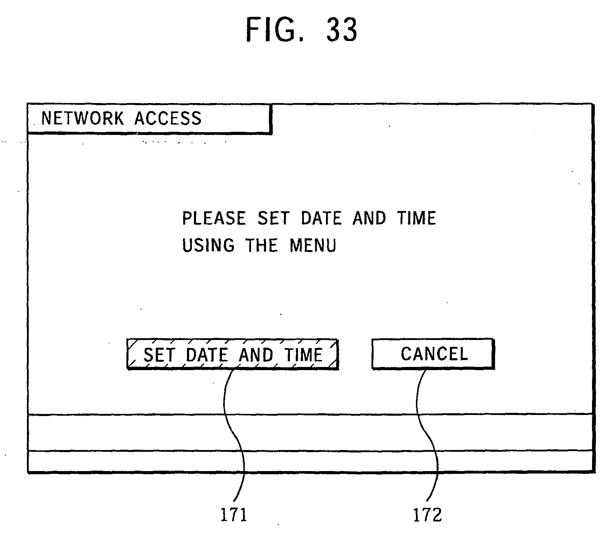

In step S83, the network access program 26c determines whether or not the date and time are set. In more detail, the network access program 26c determines whether or not settings information (area information (time difference) and information indicating whether or not summertime is in effect) is recorded in the RAM 24c in the microcomputer 24. If it is determined in step S83, for example, that the date and time are not set, in step S84, the network access program 26c displays a screen requesting that the date and time be set, as shown in Fig. 33. That is to say, at the center of the screen in Fig. 33, "Please set the date and time using the menu" is displayed and, below that, a set date and time button 171, indicating "Set date and time", and a cancel button 172 are displayed.

In step S85, the network access program 26c determines whether or not the set date and time button 171 is pressed, and if it is determined that the set date and time button 171 is pressed, the date and time setting processing is executed in step S86. The date and time setting processing in step S86 is the same as the processing described above with reference to the flowchart in Fig. 7, and thus a description thereof is omitted.

In step S87, the network access program 26c executes a GMT program 26b on the basis of area information (time difference) stored in the RAM 24c, information indicating whether or not summertime is in effect, and information in the real-time clock 25, and, after calculating World Standard Time, it controls the communication unit 29 to transmit to the server 32 via the Internet 31 the input login name and password, as authentication information, and receives a response from the server 32.

In other words, the GMT program 26b adds a value for the time difference to the current time set in the real-time clock 25 and then it obtains World Standard Time from the information indicating whether or not summertime is in effect.

Also, at this time, when authentication, as well as the authentication result, are received from the server 32, menu information for programs that can be executed is transmitted by the server 32 via the Internet 31.

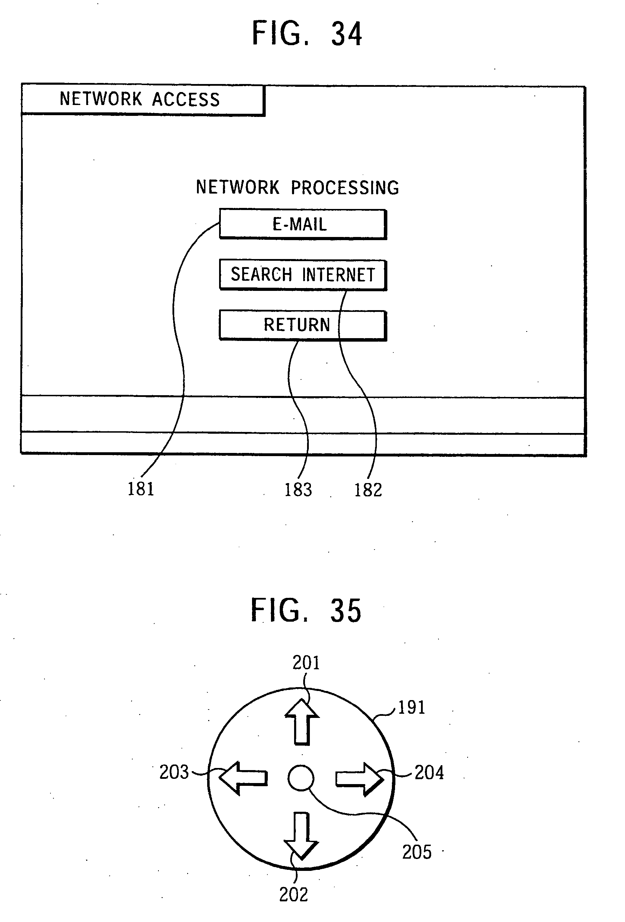

In step S88, the network access program 26c determines whether or not the authentication result from the server is confirmed, and if it is determined that authentication is confirmed, in step S90, it displays the network processing menu screen in Fig. 34 based on the menu information received from the server 32. That is to say, on the network processing menu screen shown in Fig. 34, a mail button 181, an Internet search button 182, and a return button 183 are displayed. If the mail button 181 is selected and pressed using the jog-dial 14, a mail program is executed. If the Internet search button 182 is pressed using the jog-dial 14, an Internet search engine program is executed. If the return button 183 is pressed using the jog-dial 14, the network access processing is terminated.

In step S90, the various types of processing executed by pressing the mail button 181 and the Internet search button 182 are executed as network processing. The network processing may also include processing other than the above-mentioned mail and Internet searching.

In step S91, the network access program 26c determines whether or not the return button 183 is pressed, and that processing is repeated until it is pressed; if it is determined that it is pressed, the processing is terminated and the processing then returns to step S12 in Fig. 5.

If there is no login request in step S82, in other words, if the cancel button 164 is pressed, the processing proceeds to step S12 in Fig. 5. If it is determined in step S83 that the date and time are set the processing from steps S4 to S6 is skipped and the processing proceeds to step S8. If the set date and time button 171 is not pressed in step S85, in other words, if the cancel button 172 is pressed, the processing proceeds to step S12 in Fig. 5. If authentication is not confirmed in step S88, the processing returns to step S81, and the processing thereafter is repeated.

Here we return to the description of the flowchart in Figs. 4 and 5.

If it is determined in step S3 that initial settings is not selected, the processing in steps S4 to S7 is skipped, and the processing proceeds to step S8. If it is determined in step S5 that set date and time is not selected, in step S18, it is determined whether or not a demo mode is selected, and if it is determined that the demo mode is selected, in step S19, demo mode processing is executed and then the processing returns to step S4. Demo mode processing means that a demonstration of the operations is displayed; however, the description of that processing is omitted here. If the demo mode is not selected in step S18, the processing returns to step S4. Also, if return is not selected in step S7, the processing returns to step S4. If other is not selected in step S8, in step S17, it is determined whether or not the menu button 16 is pressed, and if the menu button 16 is pressed, the processing returns to step S1, whereas if the menu button 16 is not pressed, the processing returns to step S3.

If return is selected in step S12, the processing proceeds to step S17. If network access is not selected in step S15, the processing returns to step S9.

Therefore, in the video camera 1 employing the present invention, when performing transmission and reception of data with the server 32 via a network such as the Internet 31, since it is possible to calculate World Standard Time information, which is required together with authentication information, from time difference information for each area, information indicating whether or not summertime is in effect, and current time information which is set, by transmitting it at access time together with the authentication information to the server 32 or the like, it is possible for the video camera 1 itself to transmit and receive data recorded in the VTR unit 30 or the like directly with the server 32.

In the embodiment described above, various information is input using the jog-dial 14, for the input unit 28. However, other input devices may also be used; for example, a selection button 191, as shown in Fig. 35, may be provided in the casing 15. This selection button 191 is formed of an up button 201, a down button 202, a left button 203, a right button 204, and a set button 205, and in various kinds of processing, in the same way as with the jog-dial 14, in addition to up/down information, it is possible to input left/right information and setting information.

According to the above, since a video camera can calculate World Standard Time from the current time, based on time-difference information for each area and information indicating whether or not summertime is in effect, by using the calculated World Standard Time information, it is possible to access a server directly via a network, thus making it possible for the video camera itself to transmit and receive data directly with the server.

The series of processes described above may also be implemented in hardware; however they may also be implemented in software. If the series of processes is implemented in software, the program constituting that software is installed from a recording medium into a computer with integrated dedicated hardware or into a computer which is capable of executing various functions by installing various programs, such as, for example, a general-purpose personal computer or the like.

This recording medium is not only the storage unit 26, in which a program is provided by the user when installed beforehand into the voice recognition apparatus 1 shown in Fig. 3, but, in addition to a computer, it is constituted of packaged media, such as the magnetic disk 311 (including a floppy disk), the optical disk 312 (including CD-ROM (Compact Disk-Read Only Memory) and DVD (Digital Versatile Disk)), the magneto-optical disk 313 (including MD (Mini-Disk)) or the semiconductor memory 314 (including Memory Stick), in which a program, distributed to users in order to provide programs, is recorded.

In this specification, in the steps describing the program recorded in the recording medium, the processing, which is carried out chronologically in the order mentioned, is of course not necessarily processed chronologically, but also includes processing which is executed in parallel or separately.

### INDUSTRIAL APPLICABILITY

According to the present invention, an information processing apparatus that is provided with an imaging function can directly access a server and therefore it is possible to send and receive direct data.

## Claims

1. An information processing apparatus (1) having an imaging function, comprising
an input unit (28);
time setting means arranged to set the time using said input unit;
area setting means arranged to set an area using said input unit;
summertime information setting means using said input unit arranged to set information indicating whether or not summertime is in effect;
world standard time calculating means (24, 26b) arranged to calculate a world standard time from the time set using said time setting means, from the area set using said area setting means, and from the information indicating whether or not summertime is in effect, which is set using said summertime information setting means; and
accessing means (26c) arranged to access a server via a network;
wherein, when accessing said server via said network, at said world standard time, said accessing means transmits to said server said world standard time information calculated by said world standard time calculating means.

2. An information processing apparatus according to Claim 1, further comprising:
area storage means (26a) arranged to store in advance a plurality of said areas,
wherein, said area setting means arranged to set an area, input using said input means, from among the areas stored in advance in said area storage means.

3. An information processing apparatus according to Claim 2, wherein:
said area storage means further stores time-difference information, with respect to said world standard time, for each of said plurality of areas; and
said world standard time calculating means arranged to calculate said world standard time from the time set using said time setting means, from the time-difference information, with respect to the world standard time, for the area input and set using said input means from among the areas stored in advance by said area storage means, and from said information indicating whether or not summertime is in effect, which is set using said summertime information setting means.

4. An information processing apparatus according to Claim 1, wherein said input unit is formed of a rotary/pushbutton operating element (14).

5. A video camera comprising the information processing apparatus according to Claim 1.

6. An information processing method for an information processing apparatus having an imaging function, said information processing method comprising:
a time setting step (S6) of setting the time using said input unit;
an area setting step (S11) of setting an area using said input unit;
a summertime information setting step (S14) of setting, using said input unit, information indicating whether or not summertime is in effect;
a world standard time calculating step (S87) of calculating a world standard time from the time set by the processing of said time setting step, the area set by the processing of said area setting step, and the information indicating whether or not summertime is in effect, which is set by the processing of said summertime information setting step; and
an accessing step (26c) for accessing a server via a network;
wherein, when accessing said server via said network, at said world standard time, said accessing step transmits to said server said world standard time information calculated by said world standard time calculating step.

7. A software program for installing into an information processing system having an imaging function, whereby execution of the program by the information processing system causes the information processing system to perform the steps of the method of claim 6.

8. A recording medium comprising the computer-readable program of claim 6.

## Patentansprüche

1. Infonnationsverarbeitungsgerät (1) mit einer Abbildungsfunktion, aufweisend:
eine Eingabeeinheit (28),
eine Zeiteinstellungseinrichtung, eingerichtet zum Einstellen der Zeit unter Benutzung der Eingabeeinheit,
eine Bereichseinstellungseinrichtung, eingerichtet zum Einstellen eines Bereichs unter Benutzung der Eingabeeinheit,
eine die Eingabeeinheit benutzende Sommeizeitinfornlations-Einstellungseinrichtung, eingerichtet zum Einstellen von Information, die anzeigt, ob Sommerzeit gilt oder nicht,
eine Weltstandardzeit-Berechnungseinrichtung (24, 26b), eingerichtet zum Berechnen einer Weltstandardzeit aus der unter Benutzung der Zeiteinstellungseinrichtung eingestellten Zeit, aus dem unter Benutzung der Bereichseinstellungseinrichtung eingestellten Bereich und aus der unter Benutzung der Sommerzeitinformations-Einstellungseinrichtung eingestellten Information, die anzeigt, ob Sommerzeit gilt oder nicht, und
eine Zugriffseinrichtung (26c), eingerichtet zum Zugreifen auf einen Server über ein Netzwerk,
wobei bei einem Zugriff auf den Server über das Netzwerk bei der Weltstandardzeit, die Zugriffseinrichtung die von der Weltstandardzeit-Berechnungseinrichtung berechnete Weltstandardzeitinfomation zum Server überträgt.

2. Informationsverarbeitungsgerät nach Anspruch 1, weiter aufweisend:
eine Bereichsspeichereinrichtung (26a), eingerichtet zum Speichern im Voraus mehrerer der Bereiche,
wobei die Bereichseinstellungseinrichtung eingerichtet ist zum Einstellen eines unter Benutzung der Eingabeeinrichtung eingegeben Bereichs von den in der Bereichsspeichereinrichtung im Voraus gespeicherten Bereichen.

3. Infonnationsverarbeitungsgerät nach Anspruch 2, wobei;
die Bereichsspeichereinrichtung weiter Zeitdifferenzinformation in Bezug auf die Weltstandardzeit für jeden der mehreren Bereiche speichert, und
die Weltstandardzeit-Berechnungseinrichtung eingerichtet ist zum Berechnen der Weltstandardzeit aus der unter Benutzung der Zeiteinstellungseinrichtung eingestellten Zeit, aus der Zeitdifferenzinformation in Bezug auf die Weltstandardzeit für den unter Benutzung der Eingabeeinrichtung eingegebenen und eingestellten Bereich von den durch die Bereichsspeichereinrichtung im Voraus gespeicherten Bereichen, und aus der unter Benutzung der Sommerzeitinformations-Einstellungseinrichtung eingestellten Information, die anzeigt, ob Sommerzeit gilt oder nicht.

4. Informationsverarbeitungsgerät nach Anspruch 1, wobei die Eingabeeinheit aus einem Dreh/Druckknopf-Betäligungselement (14) gebildet ist.

5. Videokamera, aufweisend das Informationsverarbeitungsgerät nach Anspruch 1.

6. Informationsverarbeitungsverfahren für ein Informationsverarbeitungsgerät mit einer Abbildungsfunktion, wobei das Informationsverarbeitungsverfahren aufweist:
einen Zeiteinstellungsschritt (S6) zum Einstellen der Zeit unter Benutzung der Eingabeeinheit,
einen Bereichseinstellungsschritt (S 11) zum Einstellen eines Bereichs unter Benutzung der Eingabeeinheit
einen Sommerzeitinformations-Einstellungsschritt (S 14) zum Einstellen unter Benutzung der Eingabeeinheit von Information, die anzeigt, ob Sommerzeit gilt oder nicht,
einen Weltstandardzeit-Berechnungsschritt (S87) zum Berechnen einer Weltstandardzeit aus der durch die Verarbeitung des Zeiteinstellungsschritts eingestellten Zeit, dem durch die Verarbeitung des Bereichseinstellungsschritts eingestellten Bereich und der durch die Verarbeitung des Sommerzeitinformations-Einstellungsschritts eingestellten Information, die anzeigt, ob Sommerzeit gilt oder nicht, und
einen Zugriffsschritt (26c) zum Zugreifen auf einen Server über ein Netzwerk,
wobei bei Zugriff auf den Server über das Netzwerk bei der Weltstandardzeit der Zugriffsschritt auf den Server die durch den Weltstandardzeit-Berechnungsschritt berechnete Standardzeitinformation überträgt.

7. Softwareprogramm zum Installieren in einem Informationsverarbeitungssystem mit einer Abbildungsfunktion, wobei Ausführung des Programms durch das Informationsverarbeitungssystem das Informationsverarbeitungssystem veranlasst, die Schritte des Verfahrens nach Anspruch 6 auszuführen.

8. Aufzeichnungsmedium, aufweisend das computerlesbare Programm nach Anspruch 6.

## Revendications

1. Dispositif de traitement d'informations (1) ayant une fonction d'imagerie, comprenant :
une unité d'entrée (28) ;
un moyen de réglage de l'heure, agencé pour régler l'heure en utilisant ladite unité d'entrée ;
un moyen de réglage de zone, agencé pour régler une zone en utilisant ladite unité d'entrée ;
un moyen de réglage d'informations d'heure d'été utilisant ladite unité d'entrée, agencé pour régler des informations indiquant si l'heure d'été est ou non en fonction ;
un moyen de calcul d'heure universelle (24, 26b) agencé pour calculer une heure universelle d'après l'heure réglée en utilisant ledit moyen de réglage de l'heure, d'après la zone réglée en utilisant ledit moyen de réglage de zone et d'après les informations indiquant si l'heure d'été est ou non en fonction, qui sont réglées en utilisant ledit moyen de réglage d'informations d'heure d'été ; et
un moyen d'accès (26c) agencé pour accéder à un serveur par l'intermédiaire d'un réseau ;
dans lequel, lors de l'accès audit serveur par l'intermédiaire dudit réseau, à ladite heure universelle, ledit moyen d'accès transmet audit serveur lesdites informations d'heure universelle calculées par ledit moyen de calcul d'heure universelle.

2. Dispositif de traitement d'informations selon la revendication 1, comprenant en outre :
un moyen de mémorisation de zone (26a) agencé pour mémoriser à l'avance une pluralité desdites zones,
dans lequel ledit moyen de réglage de zone est agencé pour régler une zone, entrée en utilisant ledit moyen d'entrée, parmi les zones mémorisées à l'avance dans ledit moyen de mémorisation.

3. Dispositif de traitement d'informations selon la revendication 2, dans lequel :
ledit moyen de mémorisation de zone mémorise en outre des informations de différence de temps, par rapport à ladite heure universelle, pour chaque zone de ladite pluralité de zones ; et
ledit moyen de calcul d'heure universelle est agencé pour calculer ladite heure universelle d'après l'heure réglée en utilisant ledit moyen de réglage de l'heure, d'après les informations de différence de temps, par rapport à l'heure universelle, pour la zone entrée et réglée en utilisant ledit moyen d'entrée parmi les zones mémorisées à l'avance par ledit moyen de mémorisation de zone, et d'après lesdites informations indiquant si l'heure d'été est ou non en fonction, qui sont réglées en utilisant ledit moyen de réglage d'informations d'heure d'été.

4. Dispositif de traitement d'informations selon la revendication 1, dans lequel ladite unité d'entrée est formée d'un élément fonctionnel rotatif/à bouton-poussoir (14).

5. Caméra vidéo comprenant le dispositif de traitement d'informations selon la revendication 1.

6. Procédé de traitement d'informations pour un dispositif de traitement d'informations ayant une fonction d'imagerie, ledit procédé de traitement d'informations comprenant :
une étape de réglage de l'heure (S6) pour régler l'heure en utilisant ladite unité d'entrée ;
une étape de réglage de zone (S11) pour régler une zone en utilisant ladite unité d'entrée ;
une étape de réglage d'informations d'heure d'été (S14) pour régler, en utilisant ladite unité d'entrée, des informations indiquant si l'heure d'été est ou non en fonction ;
une étape de calcul d'heure universelle (S87) pour calculer une heure universelle d'après l'heure réglée par le traitement de ladite étape de réglage de l'heure, la zone réglée par le traitement de ladite étape de réglage de zone et les informations indiquant si l'heure d'été est ou non en fonction, qui sont réglées par le traitement de ladite étape de réglage d'informations d'heure d'été ; et
une étape d'accès (26c) pour accéder à un serveur par l'intermédiaire d'un réseau ;
dans lequel, lors de l'accès audit serveur par l'intermédiaire dudit réseau, à ladite heure universelle, ladite étape d'accès transmet audit serveur lesdites informations d'heure universelle calculées par ladite étape de calcul d'heure universelle.

7. Programme logiciel destiné à être installé dans un système de traitement d'informations ayant une fonction d'imagerie, de façon que l'exécution du programme par le système de traitement d'informations provoque l'exécution par le système de traitement d'informations des étapes du procédé selon la revendication 6.

8. Support d'enregistrement comprenant le programme lisible par un ordinateur selon la revendication 6.
